# EUROPÄISCHE PATENTSCHRIFT

(11) **EP 2 329 587 B1**
(45) Veröffentlichungstag und Bekanntmachung des Hinweises auf die Patenterteilung: **26.04.2017**
(21) Anmeldenummer: 09783396.6
(22) Anmeldetag: 25.09.2009
(51) Int. Cl.: H02M 7/219, H02M 7/162

(54) **ANSTEUERUNG EINES SYNCHRONGLEICHRICHTERS**
TRIGGERING A SYNCHRONOUS RECTIFIER
COMMANDE D'UN REDRESSEUR SYNCHRONE

(30) Priorität: 25.09.2008 DE 102008042352
(43) Veröffentlichungstag der Anmeldung: 08.06.2011
(73) Patentinhaber: Robert Bosch GmbH, 70442 Stuttgart (DE)
(72) Erfinder: WOLF, Gert, 71563 Affalterbach (DE); MEHRINGER, Paul, 70569 Stuttgart (DE); REUTLINGER, Kurt, 70174 Stuttgart (DE); WALTER, Gerhard, 70839 Gerlingen (DE)
(86) Internationale Anmeldenummer: PCT/EP2009/062415
(87) Internationale Veröffentlichungsnummer: WO 2010/034793

(56) Entgegenhaltungen:
- DE-A1- 19 632 891
- DE-A1- 19 849 889
- DE-C1- 19 929 060
- US-A- 5 255 175
- US-A- 5 274 317
- US-A- 5 793 167

## Beschreibung

Die Erfindung betrifft eine Gleichrichter-Brückenschaltung zum Gleichrichten der von einem Generator erzeugten Phasenspannungen gemäß dem Oberbegriff des Patentanspruchs 1 zum Ansteuern von Gleichrichterelementen.

### Stand der Technik

Gleichrichter dienen dazu, eine Wechselspannung in eine Gleichspannung zu wandeln. Bekannte Gleichrichter sind dabei meist in Brückenschaltungen aufgebaut, die mehrere Dioden als Gleichrichterelemente aufweisen. Gängige Bauformen sind sogenannte Halbbrücken- oder Vollbrücken Gleichrichter. Auch Kfz-Drehstromgeneratoren umfassen i.d.R. einen Brückengleichrichter zur Versorgung des Bordnetzes mit Gleichspannung. Der Gleichrichter hat eine durch den Widerstand der Dioden und den Ausgangsstrom vorgegebene Verlustleistung. Diese lässt sich durch schaltungstechnische Maßnahmen, wie z.B. das Parallelschalten von mehreren Dioden pro Phase, nur unwesentlich verringern. Es ist daher bekannt, die Gleichrichterdioden durch aktive Schalter, wie z.B. MOSFET-Transistoren, zu ersetzen, wodurch sich die Verlustleistung wesentlich reduzieren lässt. Der Einsatz von aktiven Schaltern erfordert jedoch eine Ansteuerung der Schalter synchron zur Phasenfrequenz. Dabei ist der Einschalt- und Ausschaltzeitpunkt der Schalter besonders kritisch. Die Ansteuerung der Schalter mit Hilfe einer Steuereinrichtung ist bei den bekannten Gleichrichtern relativ kompliziert und ungenau.

### Aufgabenstellung

Aus der der US 5,274,317 A sind Gleichrichter-Brückenschaltungen zum Gleichrichten der von einem Generator erzeugten Phasenspannung bekannt. Diese umfassen eine positive Halbbrücke mit mehreren steuerbaren Schaltern und eine negative Halbbrücke mit mehreren steuerbaren Schaltern. Eine Ansteuerschaltung dient zur Erzeugung von Ansteuersignalen für die Schalter. Die Bestimmung der Einschaltzeiten der Schalter erfolgt unter Berücksichtigung eines Kennfeldes, das den Zusammenhang zwischen Einschaltzeiten und erforderlichem Strom beinhaltet.

Es ist daher die Aufgabe der vorliegenden Erfindung, ein Verfahren zum Ansteuern der Schalter einer Gleichrichter-Brückenschaltung zu schaffen, das besonders einfach und genau arbeitet und in variablen Betriebszuständen funktional ist.

Gelöst wird diese Aufgabe gemäß der Erfindung durch die im Patentanspruch 1 angegebenen Merkmale. Weitere Ausgestaltungen der Erfindung sind Gegenstand der Unteransprüche. Der wesentliche Gedanke der Erfindung besteht darin, die Einschaltzeit der jeweiligen Schalter t_{schalter ein} und / oder die Ausschaltzeit des Schalters t_{Schalter aus} anhand eines Kennfeldes oder einer Funktion zu berechnen. Das Kennfeld oder die Funktion benutzt hierbei als Eingangsgrößen maschinenspezifische Parameter wie die Drehzahl ng oder die Drehzahl ng und den Erregerstrom IE oder die Drehzahl ng und den Erregerstrom IE und die Generatorspannung UG oder die Drehzahl ng und den Erregerstrom IE und den Drehwinkel des Rotors Phi. Als zusätzliche Eingangsparameter können die Änderungen von Drehzahl und / oder Erregerstrom und/oder Generatorspannung und/oder Drehwinkel des Rotors verwendet werden.

Selbstverständlich können auch statt der angegebenen Größen andere Eingangsparameter, die sich proportional zu diesen verhalten, verwendet werden. Als Beispiele können hier z.B. statt der Verwendung der Generatordrehzahl ng die Verwendung der Frequenz der Wechselspannung der Phasen des Generators oder der zeitliche Abstand der Einschaltzeitpunkte verschiedener Phasen genannt werden. Es kann anstatt des Erregerstromes auch der Generatorstrom oder der Strom in einer Phase verwendet werden.

Zur Steuerung der Schalter ist eine Einrichtung zur Erzeugung von Steuersignalen vorgesehen, der die Phasenspannungen des Generators, die Drehzahl und / oder der Erregerstrom und/oder die Generatorspannung und /oder der Drehwinkel des Läufers zugeführt werden und die daraus die Steuersignale erzeugt. Die Einschaltbedingung der Schalter wird durch Messung der Flussspannung der Diode parallel zum Schalter ermittelt. Hieraus ergibt sich die Kommutierung der Phase im optimalen "natürlichen" Kommutierungszeitpunkt für die Gleichrichterelemente. Auf diesen Zeitpunkt kann nun in gewünschter Weise der Ausschaltzeitpunkt der Schalter bezogen werden. Die flussspannungsabhängige Steuerung des Einschaltzeitpunktes hat den wesentlichen Vorteil, dass sie mit einer Logikschaltung besonders einfach und kostengünstig aufgebaut werden kann.

### Zeichnung

Die Erfindung wird nachstehend anhand der beigefügten Zeichnungen beispielhaft näher erläutert. Es zeigen:
- Figur 1a: einen Längsschnitt durch einen Wechselstrommotorgenerator für Kraftfahrzeuge mit einem Klauenpolrotor,
- Figur 1b: die Struktur eines Brückengleichrichters mit aktiven Schaltern,
- Figur 2: dreiphasige Ausführungsform des Wechselstrommotorgenerators, in Dreieck verschaltet,
- Figur 3: fünfphasige Ausführungsform des Wechselstrommotorgenerators, im fünfzackigen Stern verschaltet,
- Figur 4: siebenphasige Ausführungsform des Wechselstrommotorgenerators, im siebenzackigen stumpfen Stern verschaltet,
- Figur 5a: den prinzipiellen Verlauf der Phasenspannung
- Figur 5b: die Phasen-, Schalter- und Diodenströme bzw. Spannungen bei Ansteuerung der Schalter gemäß der Erfindung,
- Figur 6: Regelung über t Schalter aus,
- Figur 7: Regelung über t Schalter aus und einem vereinfachten Kennfeld,
- Figur 8: Regelung über t Schalter ein,
- Figur 9: Regelung über der t Schalter aus

### Beschreibung der Ausführungsbeispiele

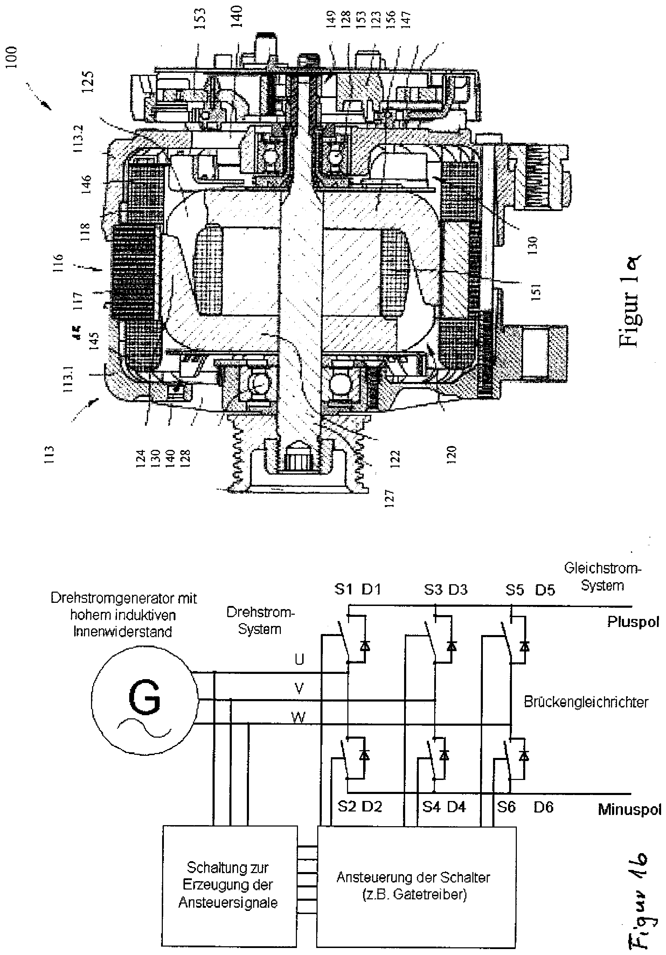

In Fig. 1a ist ein Schnitt durch einen Wechselstrommotorgenerator 100 für Kraftfahrzeuge dargestellt. Dieser weist unter anderem ein zweiteiliges Gehäuse 113 auf, das aus einem ersten Lagerschild 113.1 und einem zweiten Lagerschild 113.2 besteht. Das Lagerschild 113.1 und das Lagerschild 113.2 nehmen in sich einen Stator 116 auf, mit einem kreisringförmigen Blechpaket 117, in dessen nach innen offene und sich axial erstreckende Nuten 119 eine Statorwicklung 118 eingelegt ist. Der ringförmige Stator 116 umgibt mit seiner radial nach innen gerichteten Oberfläche einen elektromagnetisch erregten Rotor 120, der als Klauenpolläufer ausgebildet ist. Der Rotor 120 besteht unter anderem aus zwei Klauenpolplatinen 122 und 123, an deren Außenumfang sich jeweils in axialer Richtung erstreckende Klauenpolfinger 124 und 125 angeordnet sind. Beide Klauenpolplatinen 122 und 123 sind im Rotor 120 derart angeordnet, dass ihre sich in axialer Richtung erstreckenden Klauenpolfinger 124, 125 am Umfang des Rotors 120 einander als Nord- und Südpole abwechseln.

Es ergeben sich dadurch magnetisch erforderliche Klauenpolzwischenräume zwischen den gegensinnig magnetisierten Klauenpolfingern 124 und 125, welche wegen der sich zu ihrem freien Enden hin verjüngenden Klauenpolfinger 124 und 125 leicht schräg zur Maschinenachse verlaufen. In diesen Klauenpolzwischenräumen können Permanentmagnete zur Streuflusskompensation eingebracht sein. Für die folgende Beschreibung der Ausführungsbeispiele der Erfindung und in den Ansprüchen ist dieser Verlauf vereinfacht als axial bezeichnet. Der Rotor 120 ist mittels einer Welle 127 und je einem auf je einer Rotorseite befindlichen Wälzlager 128 in den jeweiligen Lagerschilden 113.1 beziehungsweise 113.2 drehbar gelagert. Er weist zwei axiale Stirnflächen auf, an denen jeweils ein Lüfter 130 befestigt ist. Diese Lüfter 130 bestehen im Wesentlichen aus einem plattenförmigen beziehungsweise scheibenförmigen Abschnitt, von dem Lüfterschaufeln in bekannter Weise ausgehen.

Diese Lüfter 130 dienen dazu, über Öffnungen 140 in den Lagerschilden 113.1 und 113.2 einen Luftaustausch zwischen der Außenseite und dem Innenraum der elektrischen Maschine 100 zu ermöglichen. Dazu sind die Öffnungen 140 an den axialen Enden der Lagerschilde 113.1 und 113.2 vorgesehen, über die mittels der Lüfter 130 Kühlluft in den Innenraum der elektrischen Maschine 100 eingesaugt wird. Diese Kühlluft wird durch die Rotation der Lüfter 130 radial nach außen beschleunigt, so dass sie durch die kühlluftdurchlässigen Wickelköpfe 145 auf der Antriebsseite und 146 auf der Elektronikseite hindurch treten kann. Durch diesen Effekt werden die Wickelköpfe 145, 146 gekühlt. Die Kühlluft nimmt nach dem Hindurchtreten durch die Wickelköpfe 145, 146, beziehungsweise nach dem Umströmen dieser Wickelköpfe 145, 146 einen Weg radial nach außen durch in nicht dargestellten Öffnungen.

In Figur 1a auf der rechten Seite befindet sich eine Schutzkappe 147, die verschiedene Bauteile vor Umgebungseinflüssen schützt. So deckt diese Schutzkappe 147 beispielsweise eine Schleifringbaugruppe 149 ab, die eine Erregerwicklung 151 mit Erregerstrom versorgt. Um diese Schleifringbaugruppe 149 herum ist ein Kühlkörper 153 angeordnet, der hier als Kühlkörper für den gesteuerten Gleichrichter/Wechselrichter und für das Steuergerät wirkt. Zwischen dem Lagerschild 113.2 und dem Kühlkörper 153 ist eine Anschlussplatte 156 angeordnet, welche dies Wicklungsanschlussdrähte mit den Anschlüssen des Steuergeräts, bzw. des Gleichrichters / Wechselrichters verbindet.

Figur 1b zeigt die Struktur eines Brückengleichrichters mit aktiven Schaltern, die bei der Betrachtung der erfindungsgemäßen Verfahren zugrunde gelegt werden kann. Die Bezeichnungen in der Schaltung dienen zum besseren Verständnis. Die Spannung an wenigstens einer oder jeder der Dioden D1 - D6 wird ausgewertet, dies erfolgt beispielsweise über einen Komparator mit Schaltschwelle von beispielsweise 3,3 Volt.

Erfindungsgemäß wird ein Regelverfahren zur Erzeugung der Steuersignale für einen Gleichrichter mit aktiven Schaltelementen beschrieben. Diese Signale werden dabei ohne Lagesensoren und ohne eine hochgenaue Analogschaltung mittelsFlussspannungsmessung an den Dioden mit Minimaltoleranzen oder Strommessung gewonnen. Wichtig bei dieser Schaltungsanordnung ist jedoch, dass parallel zu den aktiven Schaltern noch passive Dioden liegen.

Das Verfahren bzw. die Schaltung eignet sich daher besonders für Gleichrichter mit aktiven Schaltern die diese Dioden bereits im Halbleiteraufbau besitzen wie z.B. MOSFET-Transistoren. Bei diesen müssen keine zusätzlichen Dioden eingebracht werden. Hauptziel ist es durch die einfache Erzeugung der Steuersignale die Synchrongleichrichtung kostengünstig und robust darzustellen und damit die Gleichrichterverluste zu reduzieren.Die Erfindung bietet eine Ansteuerstrategie, die bei einfacher Auswerteelektronik eine robuste Ansteuerung realisiert, die in variablen Betriebszuständen funktional ist.

Die Einschaltbedingung der aktiven Schalter kann leicht über Auswertung der Spannung an der Inversdiode des MOSFET gewonnen werden. Bei einer Flussspannung von typischerweise 0,7V ist eine sicher Detektion der Einschaltbedingung mit einen Grenzwert von z.b. 0,35V möglich. Sobald die Ansteuerung erfolgt ist bricht jedoch dieses Signal ein, da die Diodenflussspannung durch den RDS_on des MOSFETs überbrückt' wird. Hierin ist der Gewinn im Wirkungsgrad begründet. In einer vorangegangenen Erfindung wurde vorgeschlagen die Ausschaltentscheidung über die Phasenspannungen einer Folgephase oder durch Rechnung zu ermitteln. Dies wird bei der Dynamik über Drehzahl und Erregerstrom als problematisch erachtet. Wesentlich ist, durch bewusst vorzeitiges Abschalten im Hystereseglied ein Signal zu erzeugen auf dessen zeitliche Breite geregelt werden kann.

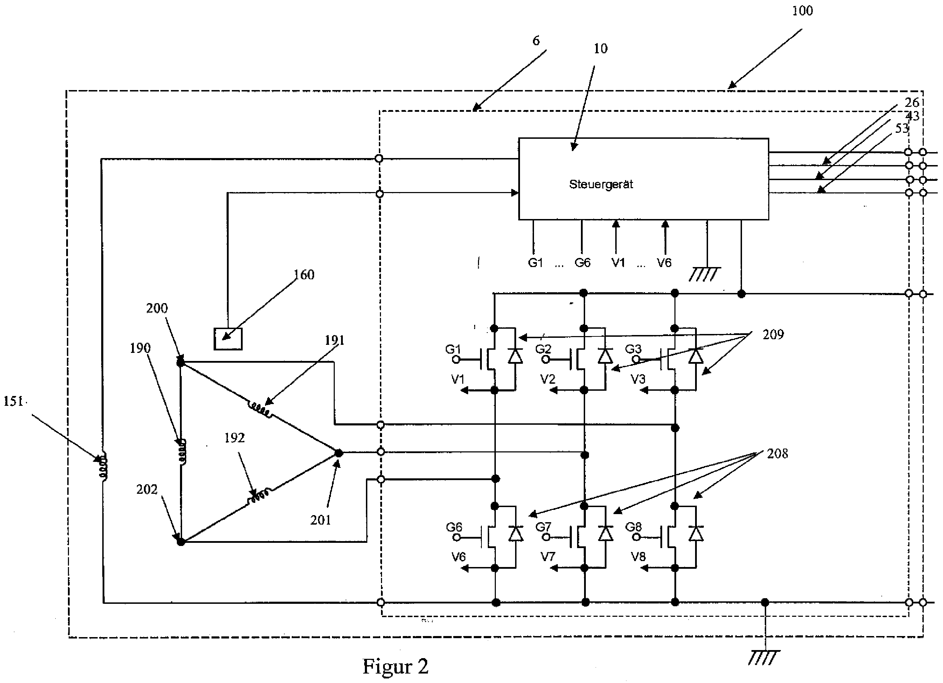

In Figur 2 ist ein Wechselstromgenerator 100 mit drei phasenbildenden Wicklungssträngen 190, 191, 192 anhand eines Schaltbildes dargestellt. Die Gesamtheit aller Wicklungsstränge 190, 191, 192 bildet die Ständerwicklung 118. Die drei phasenbildenden Wicklungsstränge 190,191,192 sind zu einer Grundschaltung als Dreieck verschaltet, wobei die verschalteten Stränge in den Ecken des Dreiecks einen Winkel von ca. 60° el. einschließen. An den Verschaltungspunkten der Ecken 200, 201, 202 des Dreiecks ist die Gleichrichter / Wechselrichterbrückenschaltung 129 angeschlossen. Die Wicklungsstränge sind wie folgt verschaltet. Der Wicklungsteilstrang 190 ist am Verschaltungspunkt 200 mit dem Wicklungsteilstrang 191 verbunden. Der Wicklungsstrang 191 ist an seinem gegenüberliegenden Ende am Verschaltungspunkt 201 mit dem Wicklungsstrang 192 verbunden. Der Wicklungsstrang 192 ist an seinem gegenüberliegenden Ende am Verschaltungspunkt 202 mit dem Wicklungsstrang 190 verbunden. Die Verschaltungspunkte befinden sich vorzugsweise axial auf oder neben dem elektronikseitigen Wickelkopf 146 um möglichst kurze Verschaltungswege zu realisieren. Hierzu treten die jeweils zu verschaltenden Anschlussdrähte der Wicklungsstränge 190, 191, 192 eines Verschaltungspunktes 200,201,202 vorzugsweise aus in Umfangsrichtung direkt benachbarten Nuten 119 aus.

Die Verschaltungspunkte 200,201,202 der Wicklungsstränge 190, 191, 192 sind mit einem separaten gesteuerten Brückenwechselrichter - Brückengleichrichter 119 verbunden, der aus drei Lowsideschaltern 208 und fünf Highsideschaltern 209 aufgebaut ist. Die Anzahl der Lowsideschaltern entspricht der Anzahl der Highsideschaltern und entspricht der Anzahl der phasenbildenden Wicklungsstränge. Die Lowsideschalter und Highsideschalter werden vorzugsweise durch MOS (Metalloxidhalbleiter) Transistoren, Bipolartransistoren, IGPT (Isolier-Gate-Bipolartransistoren), oder ähnliche Schaltbauteile gebildet. Bei der Verwendung der Bipolartransistoren oder der IGPT, sind Flächendioden mit den Highsideschaltern, bzw. Lowsideschaltern jeweils parallel verbunden, so dass die Gleichstromfließrichtungen der Dioden jeweils gegen die Gleichstromrichtungen der Schaltbauteile entsprechend umgekehrt werden.

Als Transistoren der Highsideschalter, bzw. Lowsideschalter, werden vorzugsweise Leistungstransistoren, deren Träger Elektronen sind, angewandt, da diese Widerstandsverluste und Kosten reduzieren, d. h. es werden n-Kanal MOS-Transistoren in allen Arten von MOS-Transistoren, npn-Transistoren in allen Arten von Bipolartransistoren oder isolierte Gate-npn-Transistoren in allen Arten von IGPT ausgewählt. Gleichspannungsseitig ist ein Steuergerät parallel geschaltet, das durch Beeinflussung des Stromes durch die Erregerwicklung 151 die Spannung des Generators regelt. Das Steuergerät kann zusätzlich noch eine Verbindung zum Gleichrichter aufweißen, um die Frequenz der Wechselspannung der durch die phasenbildenden Wicklungen induzierten Spannung zu ermitteln. und daraus die aktuelle Drehzahl des Motorgenerators zu ermitteln.

Das Steuergerät ist optional zum Empfang der Rotorpositionssignals, der Signale von den Kommunikationsanschlüssen, und einem Steuersignal ausgelegt. Das Steuergerät ist ebenfalls in Betrieb, um Gatespannungen VG1-VG6 der jeweiligen Bauteile basierend auf den empfangenden Signalen zu erzeugen, wodurch die erzeugten Gatespannungen VG1-VG6 an die Gate-Anschlüsse G1-G6 der Schaltelemente versorgt werden, um jeweils einen Ein sowie Auszustand dieser schaltbar zu steuern.

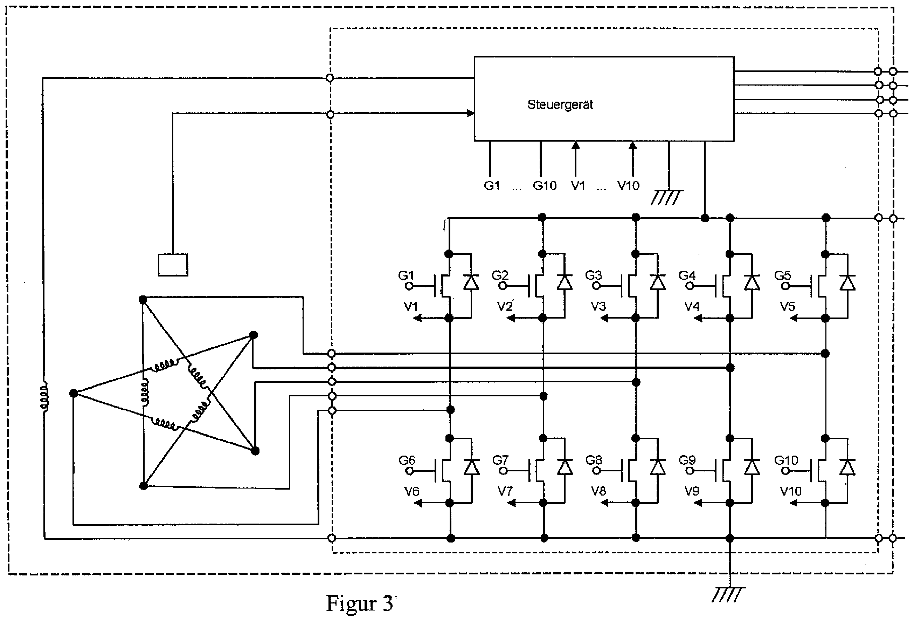

In Figur 3 ist ein Wechselstromgenerator 100 mit fünf phasenbildenden Wicklungssträngen 170, 171, 172, 173, 174 anhand eines Schaltbildes dargestellt. Die Gesamtheit aller Wicklungsstränge 170, 171, 172, 173, 174 bildet die Ständerwicklung 118. Die fünf phasenbildenden Wicklungsstränge 170, 171, 172, 173, 174 sind zu einer Grundschaltung als fünfzackiger Stern, auch als Drudenfuß bezeichnet, verschaltet, wobei die jeweils in den Zacken des Sterns verschalteten Stränge einen Winkel von ca. 36° el. einschließen. An den Verschaltungspunkten der Zacken 180, 181, 182, 183, 184 des fünfzackigen Sterns ist die Gleichrichterbrückenschaltung 129 angeschlossen. Die Wicklungsstränge sind wie folgt verschaltet.

Der Wicklungsteilstrang 170 ist am Verschaltungspunkt 180 mit dem Wicklungsteilstrang 171 verbunden. Der Wicklungsstrang 171 ist an seinem gegenüberliegenden Ende am Verschaltungspunkt 181 mit dem Wicklungsstrang 172 verbunden. Der Wicklungsstrang 172 ist an seinem gegenüberliegenden Ende am Verschaltungspunkt 182 mit dem Wicklungsstrang 173 verbunden. Der Wicklungsteilstrang 173 ist an seinem gegenüberliegenden Ende am Verschaltungspunkt 183 mit dem Wicklungsstrang 174 verbunden. Der Wicklungsstrang 174 ist an seinem gegenüberliegenden Ende am Verschaltungspunkt 184 mit dem Wicklungsstrang 170 verbunden. Die Verschaltungspunkte befinden sich vorzugsweise axial auf oder neben dem elektronikseitigen Wickelkopf 146 um möglichst kurze Verschaltungswege zu realisieren.

Hierzu treten die jeweils zu verschaltenden Anschlussdrähte der Wicklungsstränge 170, 171, 172, 173, 174 eines Verschaltungspunktes 180, 181, 182, 183, 184 vorzugsweise aus in Umfangsrichtung direkt benachbarten Nuten 119 aus. Die Verschaltungspunkte 180, 181, 182, 183, 184 der Wicklungsstränge 170, 171, 172, 173, 174 sind mit einem separaten Brückengleichrichter / Brückenwechselrichter verbunden, der aus fünf Lowsideschaltern und fünf Highsideschaltern 159 aufgebaut ist. Der übrige Aufbau entspricht dem Aufbau aus Figur 2. Gemessen wird die Spannung über einer Diode und daraus die aktuelle Drehzahl des Generators ermittelt. Das Bordnetz ist schematisch durch die Fahrzeugbatterie 30 und durch Fahrzeugverbraucher 33 dargestellt.

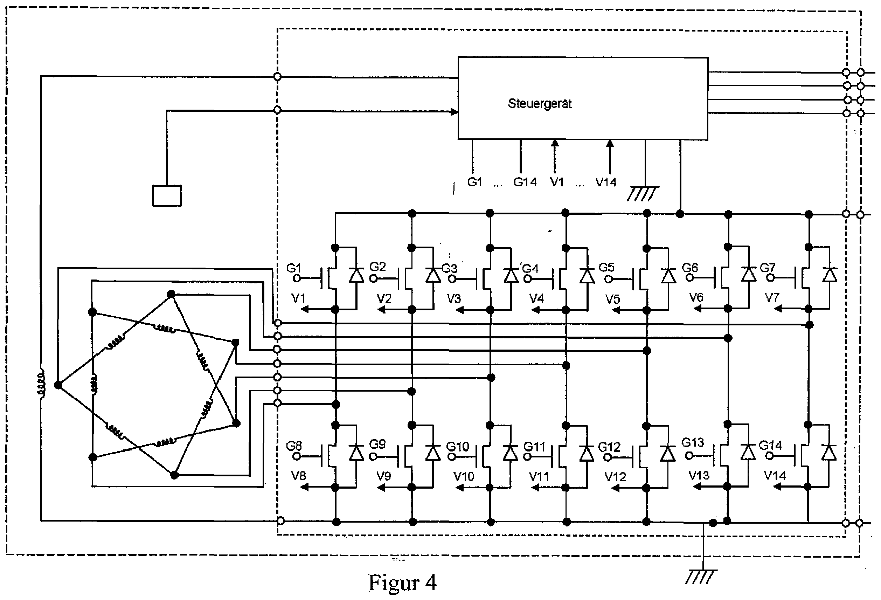

Figur 4 enthält eine vorteilhafte Verschaltungsart mit sieben phasenbildenden Wicklungen.

Ein Aufbau mit 2x3 Phasen, wobei die unabhängigen Dreiphasensystem gegeneinander elektrisch versetzt sind, ist ebenfalls als zielführenden Ständerkonfiguration möglich

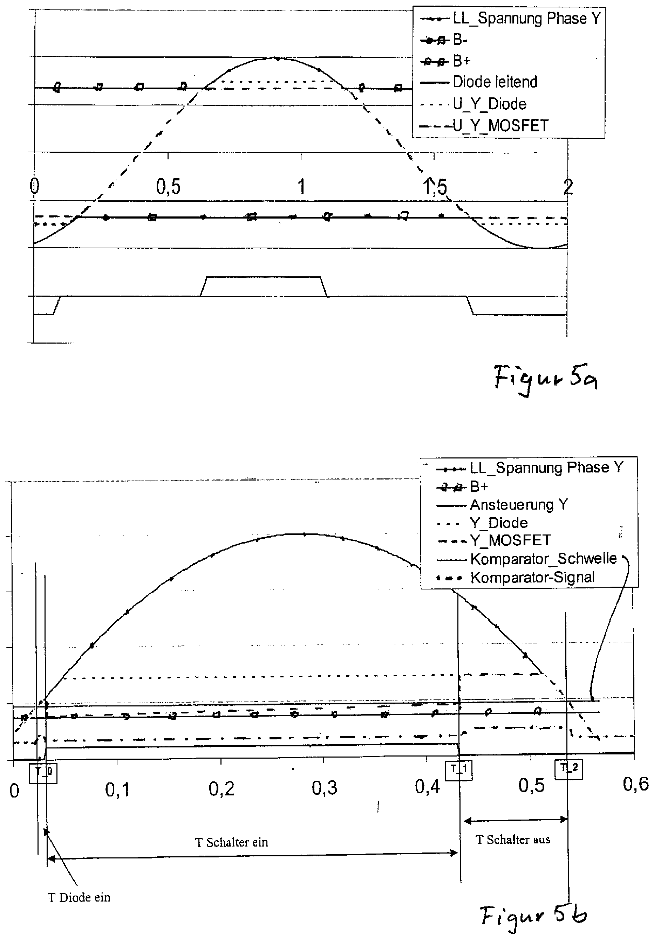

Figur 5a zeigt den prinzipiellen Verlauf der (Phasen)Spannungen. Dabei gilt:
LL_Spannung Phase Y zeigt den theoretischen Verlauf bei Leerlaufspannung,
U_Y_Diode zeigt den Spannungsverlauf bei Verwendung eines herkömmlichen Diodengleichrichters
U_Y_Mosfet zeigt den Spannungsverlauf bei Verwendung eines idealen Schalters.

Problematisch ist die Ausschaltentscheidung zu treffen, da im durchgesteuerten Zustand die Batteriespannung dem Generator aufgeprägt wird. Des weiteren ist damit zu rechnen, daß sich der Ausschaltzeitpunkt durch dynamischen Änderungen im System (Drehzahländerungen, Lastsprünge, Erregerfeldänderungen) ständig ändern kann.

Figur 5b zeigt den theoretischen Verlauf der Phasenleerlaufspannung gegen Masse. Dabei ist beispielsweise die Detailaufnahme der oberen Halbwelle bei Verwendung eines Komparators zwischen U_BAT und Phase Y mit einer Schaltschwelle von 300mV angegeben.

Es bedeuten:
LL_Spannung Phase Y. B+ kennzeichnet den Verlauf der gleichgerichteten Spannung an den Klemmen des Brückengleichrichters. Ansteuer Y kennzeichnet das Signal zur Ansteuerung des Schalters.

Y_Diode kennzeichnet den theoretischen Verlauf der Phasenspannung gegen Masse bei reinem Diodenbetrieb ohne Verwendung der Schalter.

Y_MOSFET kennzeichnet den tatsächlichen Verlauf der Phasenspannung gegen Masse, wobei im ersten Moment, während t Diode ein die Spannung aufgrund des Spannungsabfalls Uf an der Diode ansteigt. Sobald die Einschaltbedingung für den MOSFET erfühlt ist, ist der Zeitabschnitt t_{diode ein} beendet und es beginnt der Zeitabschnitt t_{schalter ein}. Während dieses Zeitabschnittes liegt die Spannung Phase gegen Masse nur minimal über der Generatorspannung. Zum Zeitpunkt T1 wird der Schalter geöffnet, die Spannung Phase gegen Masse steigt auf den Wert mit Diodenbetrieb an. Die Diode übernimmt hierbei den Strom für eine Zeit t_{Schalter aus}.

Eine mögliches erfindungsgemäßes Verfahren läuft folgendermaßen ab:
Zum Zeitpunkt T_0 kann aufgrund der Erkennung des Komparators die Ansteuerentscheidung gefällt werden. Die Spannung über dem Schalter bricht ein. Das Komparatorsignal geht auf ,aus'. Zum Zeitpunkt T_1 schaltet die Ansteuerlogik den Schalter ab aufgrund eines gelernten Tastverhältnisses. Das System geht in den Diodenbetrrieb über, die Spannung der Phase überschreitet die Komparatorschwelle, das Komparatorsignal springt auf ,an'. Sobald das System natürlich abkommutiert ist T_2 erreicht. Auf Basis der gemessenen Zeitdifferenz T_2-T_1 kann ein Regler für die gesteuerte Zeitdifferenz T_2 - T_1 aufgebaut werden, der den aktiven Bereich zwischen T_0 und T_1 und damit den Wirkungsgrad maximiert. Als Sollwertvorgabe für T_2 - T_1 wird ein Kennfeld abhängig von der Drehzahl n verwendet, da im unteren Drehzahlbereich eine höhere Dynamik des Systems vorgehalten werden muss. Desweiteren ist die Länge des aktiven Fensters vom Erregerstrom der Maschine abhängig. Dies wird durch die Regelung der Fensterbreite T_2 - T_1 erreicht. T_2 - T_1 soll im Ziel nie null sein!

Hauptvorteil der Erfindung ist eine sichere Erkennung des Ein- und Ausschaltzeitpunktes des MOSFET mit nur einer störsicheren analogen Komparatorik pro Schalter. Die Zeitsteuerung erfolgt vorteilhaft digital, ebenso wie die Regelung auf eine definierte, insbesondere minimale Zeit T_2 - T_1.

Weiterer Hauptvorteil ist, daß eine adaptive Nachregelung von dynamischen Änderungen im System, insbesondere Drehzahländerungen, Lastsprünge, Erregerfeldänderungen usw. ausgeregelt wird, mit dem Ziel eine maximale Performance bei minimaler Störanfäligkeit zu erreichen.

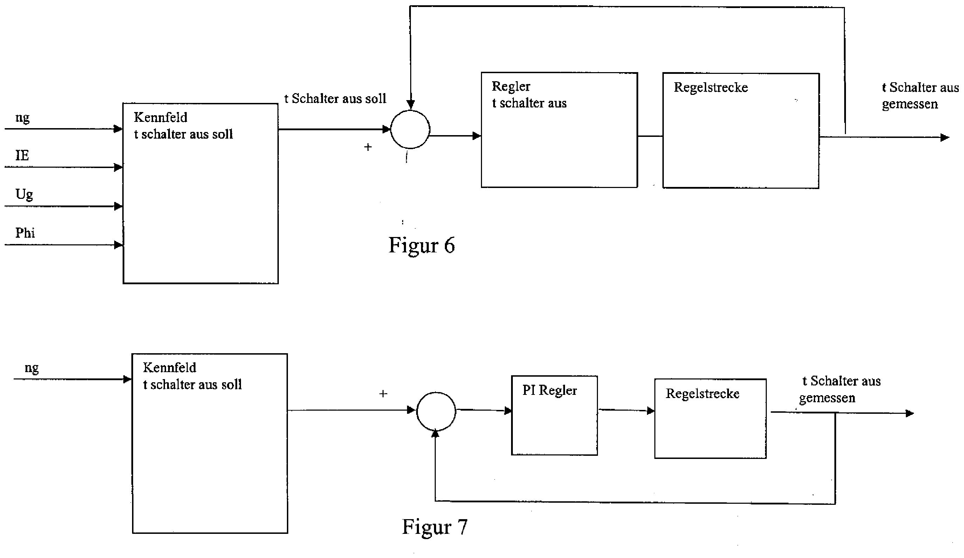

Figur 6 zeigt den Aufbau einer ersten Ausführungsform der Erfindung. Hierbei wird ein Kennfeld verwendet, dass als Eingangsgrößen die Drehzahl ng oder die Drehzahl ng und den Erregerstrom IE oder die Drehzahl ng und den Erregerstrom IE und die Generatorspannung UG oder die Drehzahl ng und den Erregerstrom IE und den Drehwinkel des Rotors Phi verwendet und als Ausgangsgröße t Schalter aus soll ausgibt. Dieser Wert wird dem Regler als Sollwert zur Verfügung gestellt.

In Figur 7 ist eine Konkretisierung des ersten Ausführungsbeispiels dargestellt, wobei t _{Schalter aus soll} aus einem Kennfeld berechnet wird, dass als Eingangsgröße die Generatordrehzahl ng hat. Der Regler ist als PI Regler ausgeführt.

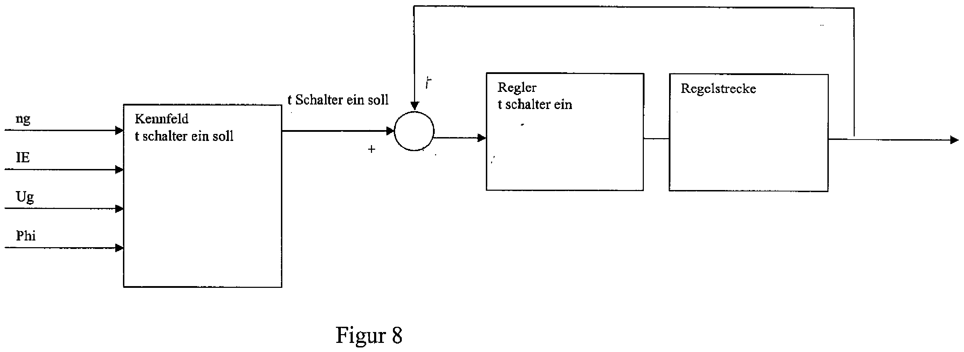

Figur 8 zeigt den Aufbau eines zweiten Ausführungsform der Erfindung. Hierbei wird ein Kennfeld verwendet, dass als Eingangsgrößen die Drehzahl ng oder die Drehzahl ng und den Erregerstrom IE oder die Drehzahl ng und den Erregerstrom IE und die Generatorspannung UG oder die Drehzahl ng und den Erregerstrom IE und den Drehwinkel des Rotors Phi verwendet und als Ausgangsgröße t Schalter ein soll ausgibt. Dieser Wert wird dem Regler als Sollwert zur Verfügung gestellt.

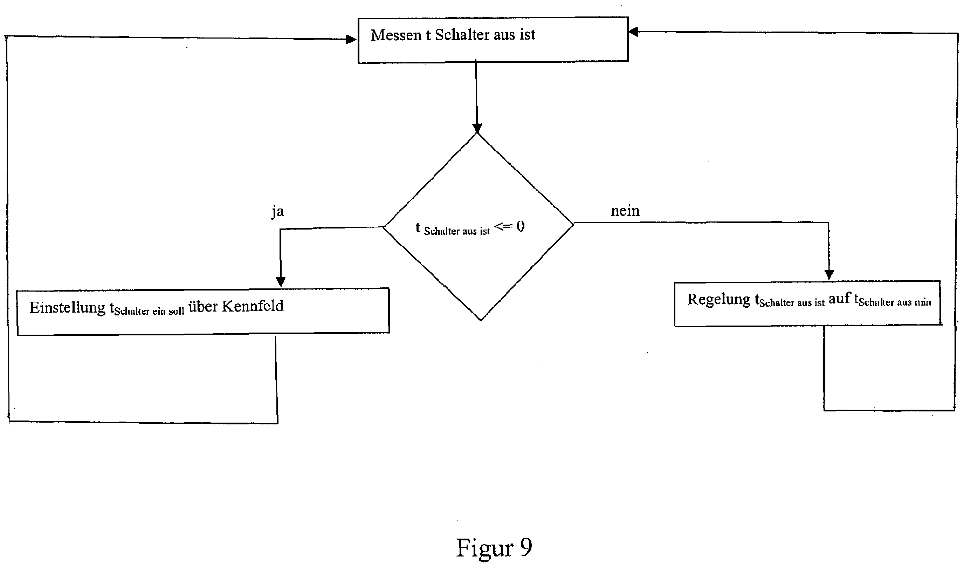

Figur 9 zeigt das Prinzip eines dritten Ausführungsbeispiels. Hierbei wird die Zeit t Schalter aus gemessen. Ist diese größer als 0, wird ein Regelalgorithmus durchlaufen, der die Zeit t _{Schalter} aus auf einen Wert t _{Schalter aus min} einregelt. Der Wert t _{Schalter aus min} ist vorzugsweise ein konstanter Wert oder ein prozentualer Teil der Kommutierungsdauer oder der Einschaltdauer. Dabei ist der Wert t_{Schalter aus} kleiner oder gleich 0.

## Patentansprüche

1. Verfahren zum Ansteuern einer Gleichrichter-Brückenschaltung zum Gleichrichten der von einem Generator (100) erzeugten Phasenspannung, wobei die Gleichrichter-Brückenschaltung eine positive Halbbrücke mit mehreren Gleichrichterelementen (209) und eine negative Halbbrücke mit mehreren Gleichrichterelementen (208) umfasst, wobei die Gleichrichterelemente jeweils einen steuerbaren _{Schalter} umfassen, wobei eine Ansteuerschaltung (10) zum Ein-Ausschalten der Schalter vorgesehen ist und die Einschaltzeit t_{Schalter ein soll} und / oder die Ausschaltzeit t_{schalter aus soll} der Schalter anhand eines Kennfeldes oder einer mathematischen Funktion berechnet wird, das Verfahren ist **dadurch gekennzeichnet, dass** in der Gleichrichter-Brückenschaltung parallel zu den steuerbaren Schaltern Dioden vorgesehen werden und die Diodenflussspannung gemessen wird und zur Ermittlung eines diodenflussspannungsabhängigen Einschaltzeitpunktes für die _{Schalter} herangezogen wird.

2. Verfahren nach Anspruch 1, **dadurch gekennzeichnet, dass** das Kennfeld oder die mathematische Funktion als Eingangsparameter die Generatordrehzahl ng oder die Generatordrehzahl ng und den Erregerstrom IE oder die Generatordrehzahl ng und den Erregerstrom IE und die Generatorspannung UG oder die Generatordrehzahl ng und den Erregerstrom IE und der Drehwinkel des Rotors Phi hat.

3. Verfahren nach Anspruch 1, **dadurch gekennzeichnet, dass** das Kennfeld oder die mathematische Funktion als Eingangsparameter die Generatordrehzahl ng und das Verhältnis von Anschaltdauer zu theoretisch maximaler Anschaltdauer (Kommutierungszeit) hat.

4. Verfahren nach Anspruch 2 oder 3, **dadurch gekennzeichnet, dass** das Kennfeld oder die mathematische Funktion als zusätzliche Eingangsparameter die Änderung der Generatordrehzahl ng oder die Änderung der Generatordrehzahl ng und die Änderung des Erregerstrom IE oder die Änderung der Generatordrehzahl ng und die Änderung des Erregerstrom IE und die Änderung der Generatorspannung UG oder die Änderung der Generatordrehzahl ng und die Änderung des Erregerstrom IE und die Änderung des Drehwinkel des Rotors Phi hat.

5. Verfahren nach Anspruch 1,2,3 oder 4, **dadurch gekennzeichnet, dass** der aus dem Kennfeld oder der mathematischen Funktion berechnet Wert t _{schalter ein} im Rahmen einer Steuerung verwendet wird.

6. Verfahren nach Anspruch 1,2,3 oder 4, **dadurch gekennzeichnet, dass** ein Regler vorgesehen wird, der t_{Schalter aus} anhand von t_{schalter aus soll} und t_{schalter aus} ist einregelt.

7. Verfahren nach einem der vorhergehenden Ansprüche, **dadurch gekennzeichnet, dass** der Regler im niedriger Drehzahl und / oder kleiner Erregerströme schneller regelt.

8. Verfahren nach einem der vorhergehenden Ansprüche, **dadurch gekennzeichnet, dass** die reglerbasierte Einschaltzeit auf Null gesetzt wird, wenn die Einschaltzeit des Schalters die Kommutierungszeit überschreitet.

9. Verfahren nach einem der vorhergehenden Ansprüche, **dadurch gekennzeichnet, dass** ein Vorhalt innerhalb der Kennfelder oder der mathematischen Funktion bei kleineren Erregerströmen und/oder kleineren Drehzahlen größer ist.

10. Verfahren nach einem der vorhergehenden Ansprüche, **dadurch gekennzeichnet, dass** der Einschaltzeitpunkt eines Schalters mittels eines Komparators ermittelt wird.

11. Verfahren nach Anspruch 10, **dadurch gekennzeichnet, dass** als Eingangsgröße für den Komparator die Diodenflussspannung herangezogen wird und dass der Schalter bei 0,7V Flussspannung, vorzugsweise 0,35V Diodenflussspannung durchgesteuert wird.

12. Verfahren nach einem der vorhergehenden Ansprüche 1-5, **dadurch gekennzeichnet, dass** eine Regelung die Ausschaltdauer t _{Schalter aus} auf einen Wert t _{Schalter aus min} minimiert.

13. Verfahren nach Anspruch 12, **dadurch gekennzeichnet, dass** die reglerbasierte Einschaltzeit auf einen Wert t _{Schalter ein soll} aus dem Kennfeld oder der mathematischen Funktion gesetzt wird, wenn die Einschaltzeit des Schalters die Kommutierungszeit überschreitet, wobei der Vorhalt das prozentuale Verhältnis von T _{Schalter aus soll} zur gesamten Kommutierungszeit definiert.

## Claims

1. Method for driving a rectifier bridge circuit for rectifying the phase voltage generated by a generator (100), wherein the rectifier bridge circuit comprises a positive half bridge having a plurality of rectifier elements (209) and a negative half bridge having a plurality of rectifier elements (208); wherein the rectifier elements comprise in each case a controllable switch, wherein a drive circuit (10) is provided to switch the switches on and off and the switch-on time t_{switch on setpoint} and/or the switch-off time t_{switch off setpoint} of the switches is calculated using a characteristic diagram or a mathematical function, the method being **characterized in that** diodes are provided in the rectifier bridge circuit in parallel with the controllable switches and the diode forward voltage is measured and is used to determine a diode forward voltage-dependent switch-on point in time for the switches.

2. Method according to Claim 1, **characterized in that** input parameters of the characteristic diagram or the mathematical function are the generator speed ng or the generator speed ng and the excitation current IE or the generator speed ng and the excitation current IE and the generator voltage UG or the generator speed ng and the excitation current IE and the angle of rotation of the rotor Phi.

3. Method according to Claim 1, **characterized in that** input parameters of the characteristic diagram or the mathematical function are the generator speed ng and the ratio of the switch-on duration to the maximum theoretical switch-on duration (commutation time).

4. Method according to Claim 2 or 3, **characterized in that** additional input parameters of the characteristic diagram or the mathematical function are the change in generator speed ng or the change in generator speed ng and the change in excitation current IE or the change in generator speed ng and the change in excitation current IE and the change in generator voltage UG or the change in generator speed ng and the change in excitation current IE and the change in angle of rotation of the rotor Phi.

5. Method according to Claim 1, 2, 3 or 4, **characterized in that** the value t_{sw}i_{tch on} calculated from the characteristic diagram or the mathematical function is used in the context of a control system.

6. Method according to Claim 1, 2, 3 or 4, **characterized in that** a regulator that adjusts t_{switch off} using t_{switch off setpoint} and t_{switch off actual} is provided.

7. Method according to one of the preceding claims, **characterized in that** the regulator regulates more quickly at a lower speed and/or smaller excitation currents.

8. Method according to one of the preceding claims, **characterized in that** the regulator-based switch-on time is set to zero if the switch-on time of the switch exceeds the commutation time.

9. Method according to one of the preceding claims, **characterized in that** a margin within the characteristic diagrams or the mathematical function is larger at smaller excitation currents and/or lower speeds.

10. Method according to one of the preceding claims, **characterized in that** the switch-on point in time of a switch is determined by means of a comparator.

11. Method according to Claim 10, **characterized in that** the input variable used for the comparator is the diode forward voltage and **in that** the switch is activated at 0.7 V forward voltage, preferably 0.35 V diode forward voltage.

12. Method according to one of the preceding Claims 1-5, **characterized in that** a regulation minimizes the switch-off duration t_{switch off} to a value t_{switch off min}.

13. Method according to Claim 12, **characterized in that** the regulator-based switch-on time is set to a value t_{switch on setpoint} from the characteristic diagram or the mathematical function if the switch-on time of the switch exceeds the commutation time, wherein the margin defines the percentage ratio of T_{switch off setpoint} to the entire commutation time.

## Revendications

1. Procédé de commande d'un circuit en pont à redresseur destiné à redresser la tension de phase générée par un générateur (100), dans lequel le circuit en pont à redresseur comprend un demi-pont positif ayant plusieurs éléments redresseurs (209) et un demi-pont négatif ayant plusieurs éléments redresseurs (208), dans lequel les éléments redresseurs comprennent respectivement un commutateur pouvant être commandé, dans lequel il est prévu un circuit de commande (10) destiné à fermer ou ouvrir les commutateurs et en ce que le temps de fermeture t_{commutateur fermé nominal} et/ou le temps d'ouverture t_{commutateur ouvert nominal} des commutateurs sont calculés sur la base d'un diagramme caractéristique ou d'une fonction mathématique, le procédé étant **caractérisé en ce qu'**il est prévu des diodes dans le circuit en pont à redresseur en parallèle aux commutateurs pouvant être commandés et **en ce que** la tension de passage de diode est mesurée et est utilisée pour déterminer un instant de fermeture des commutateurs en fonction de la tension de passage de diode.

2. Procédé selon la revendication 1, **caractérisé en ce que** le diagramme caractéristique ou la fonction mathématique a comme paramètres d'entrée la vitesse de rotation du générateur ng ou la vitesse de rotation du générateur ng et le courant d'excitation IE ou la vitesse de rotation du générateur ng et le courant d'excitation IE et la tension du générateur UG ou la vitesse de rotation du générateur ng et le courant d'excitation IE et l'angle de rotation du rotor Phi.

3. Procédé selon la revendication 1, **caractérisé en ce que** le diagramme caractéristique ou la fonction mathématique a comme paramètres d'entrée la vitesse de rotation du générateur ng et le rapport de la durée de fermeture à la durée de fermeture maximale théorique (temps de commutation) .

4. Procédé selon la revendication 2 ou 3, **caractérisé en ce que** le diagramme caractéristique ou la fonction mathématique a comme paramètres d'entrée supplémentaires la variation de la vitesse de rotation du générateur ng ou la variation de la vitesse de rotation du générateur ng et la variation du courant d'excitation IE ou la variation de la vitesse de rotation du générateur ng et la variation du courant d'excitation IE et la variation de la tension du générateur UG ou la variation de la vitesse de rotation du générateur ng et la variation du courant d'excitation IE et la variation de l'angle de rotation du rotor Phi.

5. Procédé selon la revendication 1, 2, 3 ou 4, **caractérisé en ce que** la valeur t_{commutateur fermé} calculée à partir du diagramme caractéristique ou de la fonction mathématique est utilisée dans le cadre d'une commande.

6. Procédé selon la revendication 1, 2, 3 ou 4, **caractérisé en ce qu'**il est prévu un régulateur qui régule le temps t_{commutateur ouvert} sur la base de t_{commutateur ouvert nominal} et de t_{commutateur ouvert réel}.

7. Procédé selon l'une quelconque des revendications précédentes, **caractérisé en ce que** le régulateur effectue une régulation d'autant plus rapide que la vitesse de rotation est faible et/ou que les courants d'excitation sont faibles.

8. Procédé selon l'une quelconque des revendications précédentes, **caractérisé en ce que** le temps de fermeture est mis à zéro lorsque le temps de fermeture du commutateur dépasse le temps de commutation.

9. Procédé selon l'une quelconque des revendications précédentes, **caractérisé en ce qu'**un temps d'avance contenu dans les diagrammes caractéristiques ou la fonction mathématique est d'autant plus grand que les courants d'excitation sont faibles et/ou que les vitesses de rotation sont faibles.

10. Procédé selon l'une quelconque des revendications précédentes, **caractérisé en ce que** l'instant de fermeture d'un commutateur est déterminé au moyen d'un comparateur.

11. Procédé selon la revendication 10, **caractérisé en ce que** la tension de passage de diode est utilisée en tant que grandeur d'entrée pour le comparateur et **en ce que** le commutateur est rendu passant pour une tension de passage de 0,7 V, et de préférence, pour une tension de passage de diode de 0,35 V.

12. Procédé selon l'une quelconque des revendications 1-5 précédentes, **caractérisé en ce qu'**une régulation minimise la durée d'ouverture t_{commutateur ouvert} à une valeur t_{commutateur ouvert min}.

13. Procédé selon la revendication 12, **caractérisé en ce que** le temps de fermeture obtenu par régulation est réglé à une valeur t_{commutateur fermé nominal} provenant du diagramme caractéristique ou de la fonction mathématique lorsque le temps de fermeture du commutateur dépasse le temps de commutation, dans lequel le temps d'avance définit le rapport en pourcentage de T_{commutateur ouvert nominal} au temps de commutation total.
